(19) Europäisches Patentamt
European Patent Office
Office européen des brevets

(11) **EP 2 065 880 B1**

(12) **EUROPEAN PATENT SPECIFICATION**

(45) Date of publication and mention
of the grant of the patent:
**15.05.2013 Bulletin 2013/20**

(21) Application number: **07744018.8**

(22) Date of filing: **24.05.2007**

(51) Int Cl.:
*G09G 3/36* (2006.01)    *G02F 1/13* (2006.01)
*G02F 1/133* (2006.01)    *G02F 1/1335* (2006.01)
*G02F 1/13357* (2006.01)    *G09G 3/20* (2006.01)
*G09G 3/34* (2006.01)

(86) International application number:
**PCT/JP2007/060584**

(87) International publication number:
**WO 2008/035488 (27.03.2008 Gazette 2008/13)**

(54) **DISPLAY DEVICE**

ANZEIGEEINRICHTUNG

DISPOSITIF D'AFFICHAGE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **20.09.2006 JP 2006254665**

(43) Date of publication of application:
**03.06.2009 Bulletin 2009/23**

(73) Proprietor: **Sharp Kabushiki Kaisha**
**Osaka-shi, Osaka 545-8522 (JP)**

(72) Inventors:
• **FUKUSHIMA, Hiroshi**
**Yamatokooriyama-shi, Nara 639-1054 (JP)**
• **YABUTA, Koji**
**Kashiba-shi, Nara 639-0264 (JP)**

• **TAKATANI, Tomoo**
**Nara-shi, Nara 630-8001 (JP)**
• **IMAI, Akira**
**Nara-shi, Nara 630-8105 (JP)**

(74) Representative: **Müller - Hoffmann & Partner Patentanwälte**
**Innere Wiener Strasse 17**
**81667 München (DE)**

(56) References cited:
EP-A- 0 751 690    EP-A2- 0 953 962
WO-A1-2007/032132    GB-A- 2 404 106
GB-A- 2 422 737    JP-A- 2004 212 648
JP-A- 2004 212 648    JP-A- 2005 078 094
JP-A- 2005 295 591    JP-A- 2007 078 923
JP-A- 2007 079 217    US-A1- 2005 046 951

**Description**

Technical Field

The present invention relates to a display device for displaying information that includes text and images, and more particularly to a display device configured to be able to simultaneously display a plurality of information in a plurality of mutually different display directions using a single display surface.

Background Art

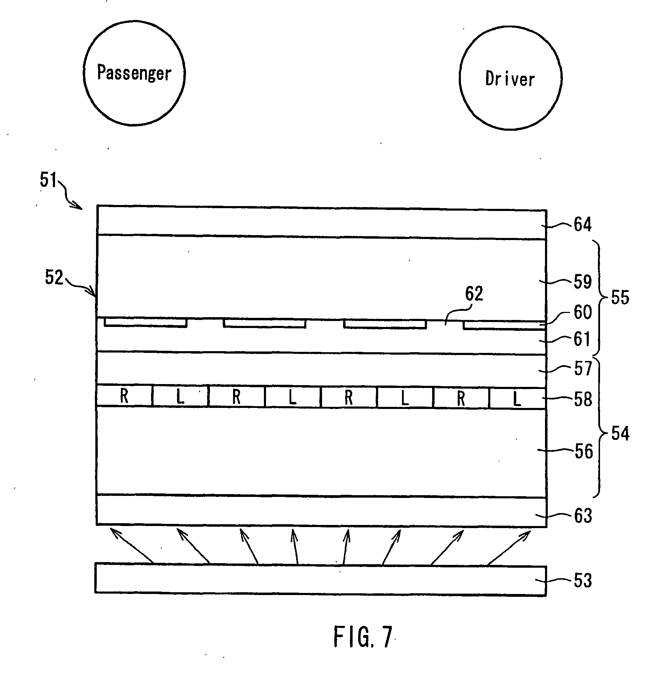

With display devices in recent years, multi-view display devices configured to be able to display different information to a plurality of users, as typified by a dual-view liquid crystal display device, have been developed and commercialized. Specifically speaking, in terms of conventional display devices, vehicular display devices incorporated in car navigation systems have been provided, for example, as disclosed in JP 2000-137443A.
JP 2004-212648 A refers to a video display device simultaneously providing different videos, wherein each video is emitted in another different direction. Each of the displayed videos is assigned to a different group of pixels and each group of pixels is assigned to another backlight source. The backlight sources for the different pixel groups and displayed videos can be controlled independently from each other. US 2005/0046951 AI refers to a video display apparatus capable of displaying different videos to different viewers, wherein the display screen displays the videos in a time divisional manner. Each displayed video is assigned to a light source. The light sources are switched in a manner synchronized with the videos.
Hereinafter, a conventional display device will be illustrated in detail with reference to FIG. 7.
FIG. 7 illustrates a schematic configuration of a conventional display device. In FIG. 7, a conventional display device 51 is equipped with a liquid crystal display device 52 and a backlight device 53 provided on the non-display side (bottom side of the figure) of the liquid crystal display device 52. A light source that uses a cold cathode tube or a light source that uses a light-emitting diode (LED), for example, is incorporated in this backlight device 53, and the backlight device 53 is configured to irradiate a prescribed illumination light (shown by the arrows in the figure) onto the liquid crystal display device 52. The conventional display device 51 can display mutually different information display images to a driver D and a passenger P on the right and left of the figure.
The liquid crystal display device 52 includes a liquid crystal panel 54 in which a plurality of pixels are provided in a matrix, a parallax barrier 55 provided on the display side of the liquid crystal panel 54, and a pair of polarizing plates 63 and 64 provided on the non-display side of the liquid crystal panel 54 and the display side of the parallax barrier 55.
The liquid crystal panel 54 has an array substrate 56 in which active elements such as TFTs (Thin Film Transistors) are provided in pixel units, and is equipped with a CF substrate 57, on which color filters are formed, disposed opposite the array substrate 56 with a liquid crystal layer 58 sandwiched therebetween. In the liquid crystal panel 54, the plurality of pixels are divided into pixel rows R for forming an information display image that will be visible to the driver D (hereinafter, "right image") and pixel rows L for forming an information display image that will be visible to the passenger P (hereinafter, "left image") that are driven separately.
That is, the liquid crystal panel 54 is configured to simultaneously form the two display images consisting of the right image and the left image, using the illumination light from the backlight device 53, and to output light corresponding to the two formed display images on the parallax barrier 55 side.
The parallax barrier 55 is provided with a barrier glass 59, a plurality of shading sections 60 and transmission sections 62 that are provided alternately in the horizontal direction in the figure, and an adhesion layer 61 for adhering the parallax barrier 55 to the liquid crystal panel 54. The shading sections 60 shade the light output from the liquid crystal panel 54. On the other hand, the transmission sections 62 transmit the light output from the liquid crystal panel 54.
The shading sections 60 are provided in stripes with the transmission sections 62 interposed therebetween, so as to correspond to right and left pixel rows R and L. The shading sections 60 shade the light of the right image formed and output by the pixel rows R such that the display image visible from the right side (driver D side) of the display device 51 is not visible from the left side (passenger P side).
On the other hand, the shading sections 60 shade the light of the left image formed and output by the pixel rows L, such that the display image visible from the left side of the display device 51 is not visible from the right side. The conventional display device 51 thereby enables vehicle navigation information, for example, to be made visible to the driver D as the right image, and content such as a movie that differs from the navigation information to be made visible at the same time to the passenger P as the left image.

Disclosure of Invention

Problem to be Solved by the Invention

However, with the conventional display device 51 such as described above, each display image could not be displayed at an optimal luminance when the right and left images were displayed at the same time, because the right and left images were displayed using illumination light from the backlight device 53. Hence, with the conventional display device 51, it was difficult to improve the display capabilities.

In view of the above problem, an object of the present invention is to provide a display device with superior display capabilities that is able to display each information display image at a suitable luminance, even when simultaneously displaying a plurality of information in a plurality of display directions.

Means for Solving Problem

In order to achieve the above object, a display device according to the present invention is configured to be able to simultaneously display a plurality of information in a plurality of display directions from a display surface, and includes a plurality of light sources provided according to the number of information display images that are simultaneously displayable; and a control section that controls a drive of the plurality of light sources, with the control section changing a light intensity of each of the plurality of light sources based on a corresponding information display image.

With the display device configured as described above, the plurality of light sources are provided according to the number of information display images that are simultaneously displayable, and the control section for controlling the drive of these light sources is installed. The control section changes the light intensity of each light source according to the corresponding information display image. Consequently, in contrast to the prior art, each information display image can be displayed at a suitable luminance even when simultaneously displaying a plurality of information in a plurality of display directions, enabling a display device with superior display capabilities to be configured.

The display device preferably further includes an image forming section that forms information display images using incident light as light from the light sources is incident thereon, and outputs light corresponding to the formed display images, and an image separation section that, by separating, in the plurality of display directions, the light of the display images output from the image forming section, makes each information display image visible in a corresponding display direction, and the control section preferably includes a lighting control section that controls the drive of the plurality of light sources independently from one another, and a display control section that, together with controlling a drive of the image forming section based on input image signals, acquires luminance information of each information display image to be simultaneously displayed from a corresponding image signal, and outputs an instruction signal for changing the light intensity of each light source to the lighting control section based on the acquired luminance information.

In this case, the display control section generates and outputs an instruction signal to the lighting control section after having ascertained the luminance information of each display image, thereby enabling the lighting control section to suitably change the light intensity of each light source in accordance with the luminance information of the corresponding display image. As a result, so-called crosstalk in which another display image becomes visible can be prevented from occurring in the plurality of display images separated in the display directions by the image separation section.

In the display device, the display control section preferably includes a crosstalk level determination section that, when the luminance information of the information display images to be simultaneously displayed is acquired from the corresponding image signals, extracts a display image with a maximum luminance based on the acquired luminance information, and determines a crosstalk level of the extracted display image on another display image, using the luminance information of the extracted display image and the luminance information of the other display image, and the display control section preferably outputs the instruction signal to the lighting control section, based on the crosstalk level determined by the crosstalk level determination section.

In this case, the lighting control section is able to suitably change the light intensity of each light source based on the crosstalk level determined by the crosstalk level determination section, thereby enabling crosstalk to be reliably prevented from occurring in the display device.

In the display device, the crosstalk level determination section preferably derives a crosstalk level XT using the following equation (1)

$$XT = Z \times K \div Y \qquad (1)$$

where Z is a luminance value of the extracted display image, K is a coefficient indicating a luminance increase rate in the other display image due to crosstalk from the extracted display image, and Y is a luminance value of the other display image.

In this case, the crosstalk level determination section derives the crosstalk level XT quantitatively using equation (1), thereby enabling crosstalk to be reliably prevented from occurring in the display device.

In the display device, the image forming section and the image separation section may be integrally constituted.

In this case, a display device that enables a reduction in device size as well as enabling the assembly process to be simplified can be easily configured.

In the display device, a parallax barrier that includes a transmission section for transmitting the light of the display images output from the image forming section and a shading section for shading the light preferably is used for the image separation section.

In this case, a compact image separation section with a simple structure is used, enabling the display device to be easily reduced in size.

Effects of the Invention

The present invention enables provision of a display device with superior display capabilities that is able to display each information display image at an appropriate luminance even when simultaneously displaying a plurality of information in a plurality of display directions.

Brief Description of Drawings

FIG. 1 illustrates a schematic configuration of a display device according to a preferred embodiment of the present invention.

FIG. 2 illustrates a main configuration of a backlight device shown FIG. 1.

FIG. 3 illustrates a main configuration of a liquid crystal panel shown FIG. 1.

FIG. 4 illustrates an operation of the display device.

FIGS. 5 illustrate the problem of crosstalk between two display images, with FIG. 5A showing two display images in the case where the effect of crosstalk does not occur, FIG. 5B illustrating a crosstalk rate determined by a crosstalk level determination section shown in FIG. 3, and FIG. 5C showing two display images in the case where the effect of crosstalk does occur.

FIG. 6 illustrates an operation in the display device with crosstalk having been eliminated.

FIG. 7 illustrates a schematic configuration of a conventional display device.

Best Mode for Carrying Out the Invention

Hereinafter, a preferred embodiment of a display device of the present invention will be described with reference to the drawings. Note that in the following description, the case where the present invention is applied to a transmissive liquid crystal display device will be illustrated. Also, in order to facilitate comparison with the prior art, the case where the display device of the present invention is configured as an on-vehicle dual-view display device that is to be incorporated in a car navigation system will be illustrated.

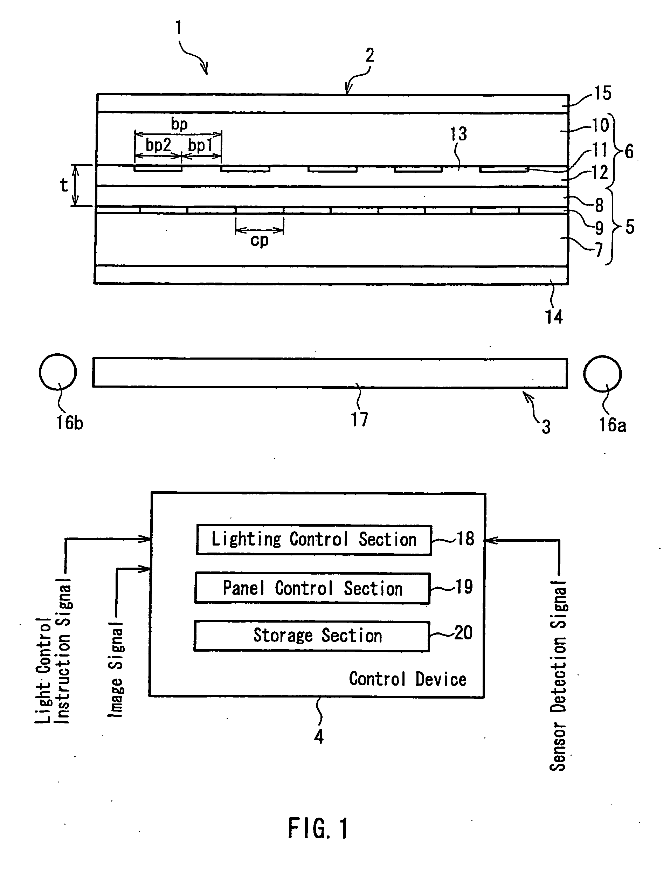

FIG. 1 illustrates a schematic configuration of a display device according to an embodiment of the present invention. In the figure, a display device 1 of the present invention includes a liquid crystal display device 2 in which the upper side of the figure is set as the display side, a backlight device 3 that is provided on the non-display side (bottom side of the figure) of the liquid crystal display device 2 and irradiates a prescribed illumination light onto the liquid crystal display device 2, and a control device 4 that serves as a control section for controlling the drive of the various components of the display device 1. This display device 1 is, for example, installed in an approximately intermediate position between the driver seat and the passenger seat of a vehicle, and is configured to be able to display (DV display) different information display images simultaneously in the two different display directions of the driver side and the passenger side.

In the liquid crystal display device 2, a liquid crystal panel 5 that serves as an image forming section and a parallax barrier 6 that serves as an image separation section are integrally constituted. Also, in the liquid crystal display device 2, a pair of polarizing plates 14 and 15 whose transmission axes are disposed in a crossed Nichol state to one another are respectively installed on the non-display side of the liquid crystal panel 5 and the display side of the parallax barrier 6.

Note that while the transmission axes of the polarizing plates 14 and 15 are arranged in TN (Twisted Nematic) alignment mode, for example, the alignment mode of the liquid crystal panel 5 is not particularly limited, and an arbitrary alignment mode (e.g., VA (Vertical Alignment) mode or IPS (In-Plane Switching) mode) can be selected.

An edge-light backlight device that has cold cathode tubes 16a and 16b that serve as light sources provided on lateral sections of the liquid crystal panel 5 is used for the backlight device 3, and with the backlight device 3, light from the cold cathode tubes 16a and 16b is incident on the liquid crystal panel 5 side via a light guiding plate 17 disposed opposite the polarizing plate 14. In other words, the backlight device 3 is incorporated in the liquid crystal panel 5 and integrated to form the transmissive liquid crystal display device 2 in which illumination light from the backlight device 3 is incident on the liquid crystal panel 5.

In the backlight device 3, the cold cathode tubes 16a and 16b are provided according to the number of information display images that are simultaneously displayable on the display surface, and are configured to enable the two display images to the driver side and the passenger side to be displayed at a suitable luminance as a result of the control device 4 changing the light intensities of the cold cathode tubes 16a and 16b (detailed below).

The liquid crystal panel 5 is provided with a plurality of pixels in a matrix along the horizontal direction in the figure and a perpendicular direction to the page. Also, the liquid crystal panel 5 is provided with an array substrate 7 provided with switching elements (active elements) such as thin film transistors or field effect transistors in pixel units, and a CF substrate 8 on which RGB color filters 9 are formed.

Also, a liquid crystal layer that is not shown is sandwiched between the array substrate 7 and the CF substrate 8, and with the liquid crystal panel 5, the liquid crystal panel 5 displays desired images on the display surface as a result of the liquid crystal layer being driven in pixel units by the control device 4.

That is, the liquid crystal panel 5 constitutes an image forming section that forms information display images using incident light as light from the cold cathode tubes 16a and 16b is incident thereon, and outputs light corresponding to the formed display images to the parallax barrier 6. Note that a transparent glass material with a thickness of around 0.5 to 0.7 mm, for example, is used for the array substrate 7. Also, a transparent glass material with a thickness of 50 μm, for example, is used for the CF substrate 8.

The plurality of pixels in the liquid crystal panel 5 are divided into two pixel rows that can be driven independently of one another, in order to form information display images that are respectively displayed and visible in the display directions of the driver side and the passenger side, being the right side and the left side of the figure, for example (hereinafter, also referred to respectively as the "right image" and the "left image"), as will be detailed below. The pixel rows for the right image and the pixel rows for the left image are provided alternately in the horizontal direction in the figure within the liquid crystal layer, so as to each oppose one of the RGB color filters 9. The measurement of the pixels in the horizontal direction in the figure (pixel pitch) is the same as the measurement of one of the RGB color filters 9 shown by "cp" in the figure, being 65 μm, for example.

The parallax barrier 6 is equipped with a transparent barrier glass 10 provided on the display side, and a plurality of shading sections 11 formed on the surface of the non-display side of the barrier glass 10 at prescribed intervals in the horizontal direction in the figure, with the parallax barrier 6 being adhered to the CF substrate 8 by an adhesion layer 12 and integrated with the liquid crystal panel 5.

Specifically speaking, an opaque resin material, for example, is used for the shading sections 11, so as to shade the light of the display images output from the liquid crystal panel 5. Also, a UV-curable transparent synthetic resin (e.g., UV-curable acrylic resin) is used for the adhesion layer 12, so as to permit the light of the display images to be transmitted, together with integrating the parallax barrier 6 with the liquid crystal panel 5.

Further, this adhesion layer 12 fills the space between any two shading sections 11 adjacent in the horizontal direction in the figure and functions as transmission sections 13 that transmit the light of the display images. In other words, in the parallax barrier 6, the plurality of shading sections 11 and the plurality of transmission sections 13 are formed alternately in the horizontal direction in the figure, and the parallax barrier 6, by separating, in the plurality of display directions, the light of the display images output from the liquid crystal panel (image forming section) 5, constitutes an image separation section that makes each information display image visible in a corresponding display direction.

Also, in the parallax barrier 6, the measurements of the shading sections 11 and the transmission sections 13 shown respectively by "bp2" and "bp1" in the figure are respectively 90 μm and 40 μm, for example, and the combined measurement of a shading section 11 and a transmission section 13 shown by "bp" in the figure is 130 μm. Also, the thickness measurement shown by "t" in the figure, that is, the thickness measurement between the surface of the color filter 9 side of the CF substrate 8 and the surface of the non-display side of the barrier glass 10 is 80 μm, for example.

The control device 4 is constituted using a data processing device such as a microcomputer or a DSP (Digital Signal Processor), and includes a lighting control section 18 for independently controlling the drive of the cold cathode tubes 16a and 16b, a panel control section 19 that serves as a display control section for controlling the drive of the liquid crystal panel 5, and a storage section 20 that stores data such as various types of programs for causing the components of the control device 4 to function. Also, the control device 4 receives instruction signals and image signals from an operation input section and a TV tuner (not shown) that accompany the display device 1 or an electronic device such as a controller, a data playback device (DVD playback device) or an HDD provided on the car navigation system side, and displays information using these input signals.

Specifically speaking, the control device 4 is configured to be able to form a display image based on an image signal of navigation information stored on the HDD, for example, and make this display image visible to the driver as the right image, and to form a display image of a TV program based on an image signal of a television broadcast received by the TV tuner, and make this display image visible at the same time to a passenger as the left image. Also, the control device 4 is able to change the light intensity of each cold cathode tube 16a and 16b in accordance with a light control instruction signal input from the operation input section, for example. The display device 1 is thereby able to appropriately change the luminance of the left image and the right image corresponding respectively to the cold cathode tubes 16a and 16b in accordance with an instruction from a user such as the driver.

Further, the control device 4 is configured to be able to receive sensor detection signals from various types of sensors mounted on the vehicle, and the control device 4 is able to suitably operate the components of the display device 1 according to the sensor detection signals. Specifically, the control device 4 is configured to be able to coordinate the change in the light intensity of the cold cathode tubes 16a and 16b with the lighting operation of vehicle headlights, for example.

In other words, when the headlights are turned on by the driver, the operating signal instructing the lighting operation is output to the control device 4 as a sensor detection signal, and the control device 4 controls the drive of the cold cathode tubes 16a and 16b such that light intensity of the cold cathode tubes 16a and 16b is reduced. As a result, with the display device 1, the overall luminance of the display images is automatically reduced in response to the lighting operation of the headlights, and display images that are easily viewable to the user are displayed.

Note that besides the description given above, the luminance of the display images can also be appropriately changed according to the detection result of a light sensor that is provided inside the vehicle and detects brightness in the vehicle.

Also, the control device 4 prevents so-called crosstalk (ghosting) in which another display image becomes visible from occurring as much as possible in the right and left images when these display images are displayed at the same time, by changing the luminance of the corresponding cold cathode tube 16a or 16b and displaying these display images at a suitable luminance.

Specifically speaking, with the control device 4, the panel control section 19, together with controlling the drive of the liquid crystal panel 5 based on image signals input to the control device 4, acquires luminance information of each information display image to be simultaneously displayed (i.e., luminance information of the right image and the left image) from a corresponding image signal, and outputs an instruction signal for changing the luminance of each cold cathode tube 16a and 16b to the lighting control section 18 based on the acquired luminance information.

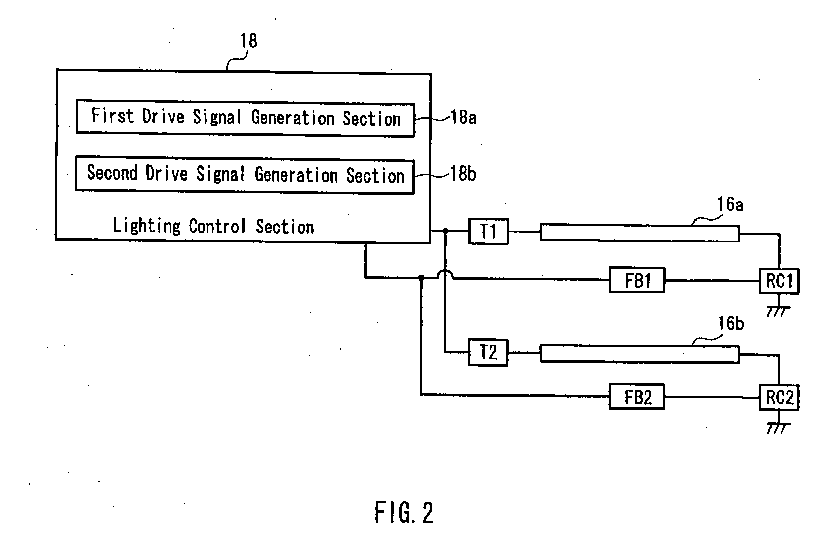

Referring also to FIG. 2, the lighting control section 18 is provided with first and second drive signal generation sections 18a and 18b that respectively generate drive signals for the cold cathode tubes 16a and 16b based on the above light control instruction signal and the instruction signal output from the panel control section 19. The lighting control section 18 independently controls the drive of the cold cathode tube 16a provided as the light source of light constituting the left image and the drive of the cold cathode tube 16b provided as the light source of light constituting the right image.

Note that besides the description given above, the display device 1 can also be configured to be able to display both display images even in the case where one of the cold cathode tubes, say, the cold cathode tube 16a for the left image, for example, cannot be turned on, by increasing the luminance of the cold cathode tube 16b for the right image.

Specifically speaking, one end of the cold cathode tube 16a is connected to the first drive signal generation section 18a via a CCFT drive circuit T1 constituted using an inverter circuit, and the CCFT drive circuit T1 turns on the cold cathode tube 16a at a high frequency, in accordance with a drive signal from the first drive signal generation section 18a. The cold cathode tube 16a is thereby driven so as to emit an amount of light instructed by the light control instruction signal and the instruction signal.

A ramp current detection circuit RC1 and a feedback circuit FB1 are connected to the other end of the cold cathode tube 16a, and the first drive signal generation section 18a controls feedback to the cold cathode tube 16a using a ramp current value detected by the ramp current detection circuit RC1. Displaying the left image at a suitable luminance can thereby be easily maintained.

Similarly, one end of the cold cathode tube 16b is connected to the second drive signal generation section 18b via a CCFT drive circuit T2 constituted using an inverter circuit, and the CCFT drive circuit T2 turns on the cold cathode tube 16b at a high frequency, in accordance with a drive signal from the second drive signal generation section 18b. The cold cathode tube 16b is thereby driven so as to emit an amount of light instructed by the light control instruction signal and the instruction signal.

A ramp current detection circuit RC2 and a feedback circuit FB2 are connected to the other end of the cold cathode tube 16b, and the second drive signal generation section 18b controls feedback to the cold cathode tube 16b using a ramp current value detected by the ramp current detection circuit RC2. Displaying the right image at a suitable luminance can thereby be easily maintained.

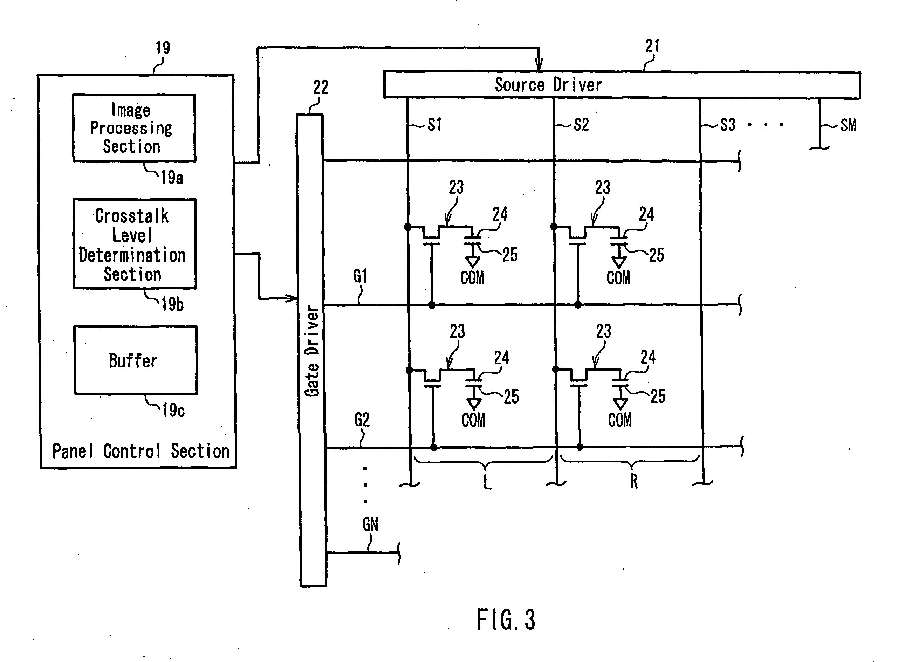

Referring also to FIG. 3, the panel control section 19 is provided with an image processing section 19a that generates instruction signals to a source driver 21 and a gate driver 22 based on the above image signals, a crosstalk level determination section 19b that determines the crosstalk level between the right and left images when these display images are displayed at the same time, and a buffer 19c that holds the data of the image signals for the right and left images to be simultaneously displayed in prescribed units (e.g., single frames).

The source driver 21 and the gate driver 22 are drive circuits that drive the plurality of pixels provided in the liquid crystal layer in pixel units, and a plurality of source bus lines S 1 to SM (M being an integer greater than or equal to 2) and a plurality of gate bus lines G1 to GN (N being an integer greater than or equal to 2) are respectively connected to the source driver 21 and the gate driver 22. These source bus lines S1 to SM and gate bus lines G1 to GN are arrayed in a matrix, and the areas of the plurality of pixels are formed in the areas partitioned into the matrix.

Note that with the areas of these pixels, the aperture shape desirably is formed substantially symmetrically in the horizontal direction in the figure. With the display device 1, the display quality of the right image and the left image can thereby be improved.

The gates of switching elements 23 provided per pixel are connected to the gate bus lines G1 to GN. On the other hand, the sources of the switching elements 23 are connected to the source bus lines S 1 to SM. Pixel electrodes 24 provided per pixel on the array substrate 7 (FIG. 1) side are connected to the drains of the switching elements 23.

The pixels are constituted such that common electrodes 25 provided on the CF substrate 8 (FIG. 1) side oppose the pixel electrodes 24 with the liquid crystal layer sandwiched therebetween. The gate driver 22 sequentially outputs gate signals for turning on the gates of corresponding switching elements 23 to the gate bus lines G1 to GN, based on the instruction signal from the image processing section 19a. On the other hand, the source driver 21 outputs voltage signals tailored to the luminance (gradation) of the display images to corresponding source bus lines S1 to SM, based on the instruction signal from the image processing section 19a.

Further, the plurality of pixels are divided into pixel rows for the left image for forming the left image and pixel rows for the right image for forming the right image, as respectively shown by "L" and "R" in the figure. These pixel rows L and R are disposed alternately in the horizontal direction in the figure.

That is, the pixel for the left image and the pixel for the right image are alternately connected per line to the source bus lines S1 to SM, and the two display images are simultaneously formed and displayed as a result of the image processing section 19a suitably driving the corresponding pixel rows based on the image signals for the left image and the right image.

The crosstalk level determination section 19b acquires luminance information from the image signals of the left image and the right image sequentially held in the buffer 19c, and extracts the brighter display image with the maximum luminance based on the acquired luminance information. The crosstalk level determination section 19b then determines the crosstalk level of the extracted display image on the remaining display image, using the luminance information of the extracted display image and the luminance information of the remaining display image.

This crosstalk level is derived as a result of the crosstalk level determination section 19b applying the luminance information of the image signals to a prescribed arithmetic expression for computing the crosstalk level, as detailed below. The panel control section 19 generates and outputs the instruction signal to the lighting control section 18 based on the crosstalk level determined by the crosstalk level determination section 19b. With the display device 1, the light intensity of each cold cathode tube 16a and 16b is thereby changed so that crosstalk does not occur in the left and right images even when these display images are displayed at the same time.

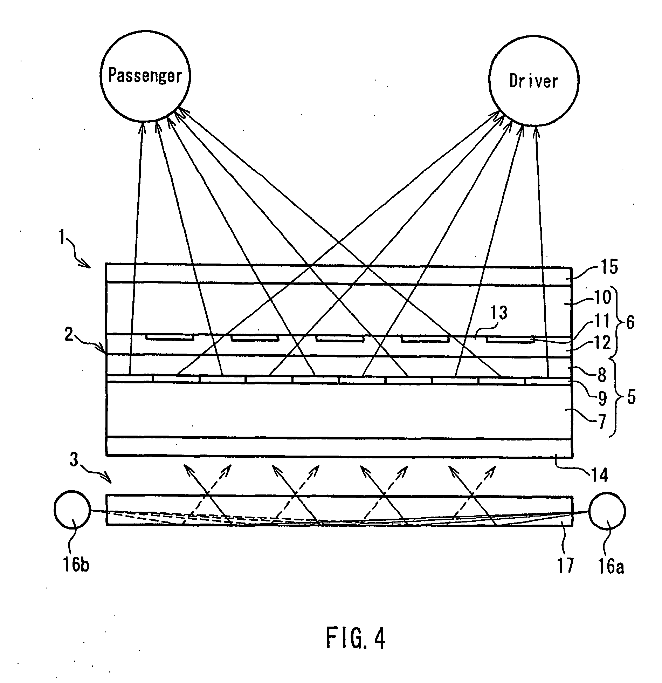

Operations of the display device 1 of the present embodiment configured as described above will be described in detail with reference also to FIGS. 4 to 6.

Firstly, the basic display operation of the display device 1 will be described using FIG. 4.

FIG. 4 illustrates an operation of the display device. As shown in FIG. 4, with the display device 1 of the present embodiment, the light of the cold cathode tube 16a is incident inside the light guiding plate 17 and output on the liquid crystal panel 5 side when the backlight device 3 is turned on, as shown by the solid arrows in the figure. The left image is then formed by the pixel rows L, and the light of the left image is output on the parallax barrier 6 side from the liquid crystal panel 5.

The light from the cold cathode tube 16b is incident inside the light guiding plate 17 and output on the liquid crystal panel 5 side, as shown by the broken arrows in the figure. The right image is then formed by the pixel rows R, and the light of the right image is output on the parallax barrier 6 side from the liquid crystal panel 5.

In the parallax barrier 6, the shading sections 11 shade the light of the left image from the pixel rows L such that the display image visible from the passenger P side is not visible from the driver D side, while the transmission sections 13 permit transmission of the light of the left image. On the other hand, the shading sections 11 shade the light of the right image from the pixel rows R such that the display image visible from the driver D side is not visible from the passenger P side, while the transmission sections 13 permit transmission of the light of the right image. With the display device 1, mutually different left and right images are thereby respectively made visible to the passenger P and the driver D at the same time.

In the case of displaying only either the left image or the right image, in the display device 1, the corresponding cold cathode tube 16a or 16b and pixel rows L or R are driven. Specifically, the control device 4, in accordance with an operating instruction from a user, operates only the cold cathode tube 16a and the pixel rows L, for example, and displays only the left image to the passenger P.

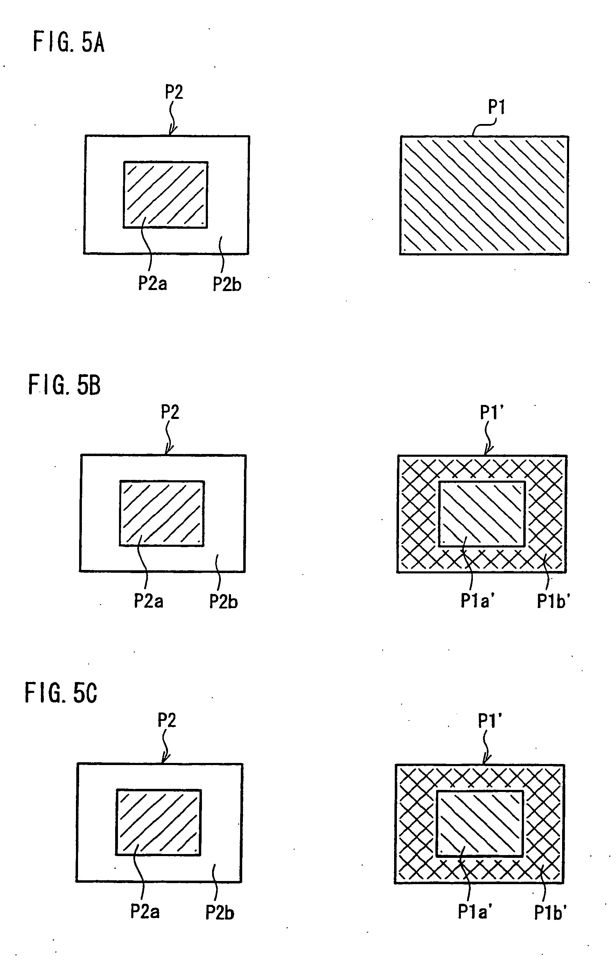

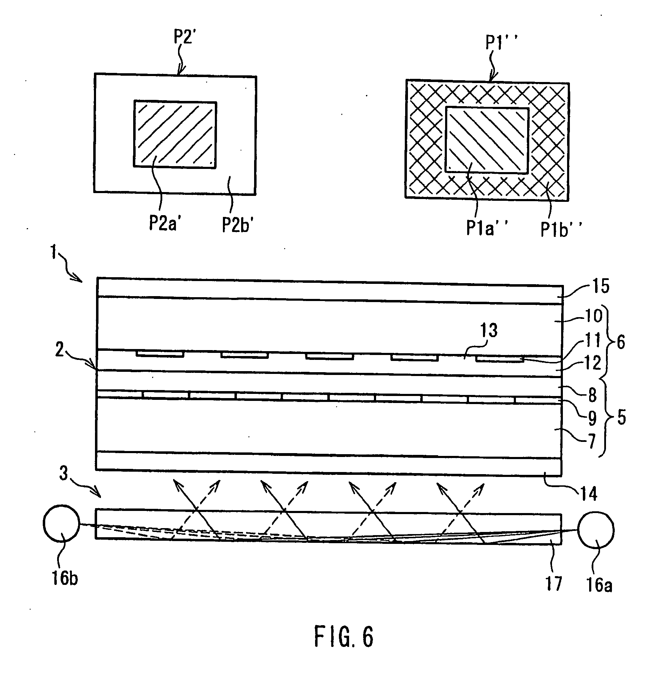

Next, an operation for determining the crosstalk level by the crosstalk level determination section 19b and an operation for turning on the cold cathode tubes 16a and 16b according to the determination operation will be described in detail with reference to FIGS. 5 and 6.

FIGS. 5 illustrate the problem of crosstalk between two display images, with FIG. 5A showing two display images in the case where the effect of crosstalk does not occur. FIG. 5B illustrates the crosstalk rate determined by the crosstalk level determination section shown in FIG. 3, and FIG. 5C shows two display images in the case where the effect of crosstalk does occur. FIG. 6 illustrates an operation in the display device with crosstalk having been eliminated. Note that in the following description, the case where the right image has uniform luminance and the left image has a portion of higher luminance than the right image will be illustrated in order to simplify the description.

In other words, in FIG. 5A, the right image P1 has entirely the same luminance (gradation), as shown by the shaded area. On the other hand, the left image P2 has a large contrast (luminance difference), with the central portion P2a having the same luminance as the right image P1, for example, as shown by the shaded area, and the peripheral portion P2b having a higher luminance than the luminance of the central portion P2a. If the right image P1 and the left image P2 having different brightnesses are displayed at the same time, crosstalk could occur due to the luminance of these display images or the refraction, diffraction or scattering of light when the light of the display images passes through the components of the display device 1.

Specifically, as shown in FIG. 5B, regarding the right image P1' and the left image P2, the image light of the higher luminance peripheral portion P2b of the left image P2 could leak into the lower luminance right image P1, and be visible as crosstalk in the right image P1' as a result of the luminance of the peripheral portion P1b' (illustrated by the cross-hatched area in the figure) of the right image P1' exceeding the luminance of the central portion P1a' (i.e., luminance of the right image P1) due to the image light. In view of this, the crosstalk level determination section 19b computes a crosstalk level XT in the right image P1' resulting from the left image P2, using the following equation (1).

$$XT = Z{\times}K{\div}Y \qquad\qquad (1)$$

In equation (1), "Z" is the luminance value of the peripheral portion P2b of the left image P2 extracted as the brighter display image. "K" is a coefficient indicating a luminance increase rate (%) resulting from crosstalk that occurs in the peripheral portion P1b' of the right image P1' due to leakage light from the peripheral portion P2b. "Y" is the luminance value of the right image P1 (central portion P1a' of the right image P1').

Note that the luminance values Z and Y are derived from the luminance information of the corresponding image signal in the buffer 19c. The luminance increase rate K is derived in advance based on the configuration of the components of the liquid crystal panel 5 and the parallax barrier 6 (e.g., materials, measurements, etc.), and is held in the storage section 20.

This luminance increase rate K is proportionate to and largely dependant on the value of the measurement bp2 of the shading sections 11, with the value of the luminance increase rate K increasing with an increase in the value of the measurement bp2, making crosstalk more likely to occur, in other words.

More specifically, in FIG. 5C, when the luminance value Z of the peripheral portion P2b and the luminance value Y of the central portion P1a' are respectively 400 (cd/m$^2$) and 2 (cd/m$^2$), and the luminance increase rate K is 1.5%, the luminance value of the peripheral portion P1b' of the right image P1' will be 6 ((= 400$\times$0.015) cd/m$^2$). Also, the crosstalk level XT will be 3 (= 400$\times$0.015 $\div$2) using equation (1). When the crosstalk level determination section 19b thus derives the value of the crosstalk level XT, it is further judged in the crosstalk level determination section 19b whether the light intensities of the cold cathode tubes 16a and 16b need to be changed, in accordance with a prescribed program (algorithm) held in the storage section 20.

Specifically speaking, if the crosstalk level XT is at or above a prescribed threshold V, the crosstalk level determination section 19b judges that the light intensities of the cold cathode tubes 16a and 16b need to be changed, assuming that crosstalk will be visible to the user.

On the other hand, if the crosstalk level XT is less than the threshold V, the crosstalk level determination section 19b judges that the light intensities of the cold cathode tubes 16a and 16b need not be changed, assuming that crosstalk will not be visible to the user.

Note that the threshold V differs according to the configuration (materials, measurements, etc.) of the components of the liquid crystal panel 5 and the parallax barrier 6, and is derived in advance and stored in the storage section 20 as a result of conducting experiments, display tests and the like.

Here, when the threshold V is "2", the value of the crosstalk level XT with the right image P1' and the left image P2 shown in FIG. 5C will be greater than the threshold V, so the crosstalk level determination section 19b judges that the light intensities of the cold cathode tubes 16a and 16b need to be changed, assuming that crosstalk will be visible to the user.

Subsequently, the crosstalk level determination section 19b determines the luminance value Z of the peripheral portion P2b and the luminance value Y of the central portion P1a', so that the value of the crosstalk level XT will be less than the threshold V. Then, the crosstalk level determination section 19b determines the light intensities of the cold cathode tubes 16b and 16a corresponding to the right image P1' and the left image P2 so as to achieve the determined luminance values Z and Y, and outputs the determined light intensities as an instruction signal from the panel control section 19 to the lighting control section 18.

Specifically, in FIG. 6, the crosstalk level determination section 19b halves the light intensity of the cold cathode tube 16a, and increases the light intensity of the cold cathode tube 16b by 1.5 times. In other words, the lighting control section 18 changes the supply current value to the corresponding cold cathode tubes 16a and 16b, so that the light intensities of the cold cathode tubes 16a and 16b achieve the above values. The luminance value of the central portion P2a' will thereby be 1 (cd/m$^2$), as a result of the luminance of the left image P2' being halved as a whole.

Also, the luminance value Z of the peripheral portion P2b' of the left image P2' will be 200 (cd/m$^2$). On the other hand, the luminance value of the central portion P1a" and the luminance value Y of the peripheral portion P1b" will be 3 (cd/m$^2$), as a result of the luminance of the right image P1" being increased by 1.5 times as a whole. Then, when the value of the crosstalk level XT is computed using the equation (1), the value of the crosstalk level XT will be 1 (= $200 \times 0.015 \div 3$), which is less than the threshold V (= 2). Consequently, with the display device 1, crosstalk can be prevented from occurring and the display operation performed, even in the case where the left image P2' and the right image P1" are displayed simultaneously.

Note that while the luminance values of the central portion P2a and the peripheral portion P2b in the left image P2 were respectively 2 (cd/m$^2$) and 400 (cd/m$^2$) in the above description, with regard to the value of the luminance value Z, the display image that includes the highest luminance value out of the left and right images to be simultaneously displayed can be extracted, and this highest luminance value can be set as Z.

Also, while the right image P1 has a uniform luminance value (2 (cd/m$^2$)) in the above description, with regard to the value of the luminance value Y, the display image that includes the lowest luminance value out of the left and right images to be simultaneously displayed can be determined as a display image in which crosstalk will occur, and this lowest luminance value can be set as Y

With the display device 1 of the present embodiment configured as described above, the two cold cathode tubes (light sources) 16a and 16b are provided according to the number of information display images that are simultaneously displayable. Further, the control device 4 changes the light intensity of each cold cathode tube 16a and 16b according to the corresponding information display image. Consequently, in contrast to the prior art, each information display image can be displayed at a suitable luminance even when simultaneously displaying a plurality of information in a plurality of display directions, enabling a display device 1 with superior display capabilities to be configured.

In the present embodiment, the panel control section (display control section) 19 acquires luminance information of each information display image to be displayed simultaneously from a corresponding image signal, and outputs an instruction signal for changing the light intensity of each cold cathode tube 16a and 16b to the lighting control section 18 based on the acquired luminance information. Hence, in the present embodiment, the panel control section 19 is able to generate and output the instruction signal to the lighting control section 18 after having ascertained the luminance information of each display image. As a result, the lighting control section 18 is able to suitably change the light intensity of each cold cathode tube 16a and 16b in accordance with the luminance information of the corresponding display image, and prevent crosstalk from occurring.

Also, in the present embodiment, the lighting control section 18 suitably changes the light intensities of the cold cathode tubes 16a and 16b based on the crosstalk level determined by the crosstalk level determination section 19b, thereby enabling crosstalk to be reliably prevented from occurring. Further, because the crosstalk level determination section 19b derives the crosstalk level quantitatively using equation (1), luminance adjustment can be optimally performed according to the crosstalk level, enabling crosstalk to be more reliably prevented from occurring.

Note that the above embodiment is merely illustrative and not restrictive. The scope of the invention is defined by the claims, and all changes which come within the meaning and range of equivalency of the claims are to be embraced within the scope.

For example, while the present invention was applied to the transmissive liquid crystal display device in the above description, the display device of the present invention is not limited to this, and can be applied to various types of non-emissive display devices that display information using the light of a light source. Specifically speaking, the display device of the present invention can be favorably used in a semi-transmissive liquid crystal display device or a projection display device such as a rear projection display device that uses the above liquid crystal panel (image forming section) as a light valve.

While configured as the on-vehicle dual-view display device to be incorporated in the car navigation system in the above description, the display device of the present invention is not limited to this, and can, for example, be configured as an information guidance display device that is installed between two parallel escalators and respectively performs upper floor and lower floor guidance to users on up and down escalators.

While configured to be able to display two display images simultaneously in the two directions of the left side and the right side in the above description, the display device of the present invention is not limited in any way as long as the display device includes a plurality of light sources provided according to the number of information display images that are simultaneously displayable and a control section that changes the light intensity of each light source based on the corresponding information display image.

Specifically, the display device of the present invention can also be configured as a display device that respectively displays three display images in three display directions, for example, by rearranging the parallax barrier (image separation section) and the like. Also, different display images can be displayed in the upper direction and the lower direction from the display surface, or the same display image can be displayed simultaneously in a plurality of directions. Further, with respect to a display image displayed in one display direction, the luminance of the display image can also be partially changed by providing a plurality of light sources and appropriately changing the light intensity of each light source.

While the parallax barrier was used for the image separation section in the above description, the image separation section of the present invention is not limited to this, and can also be configured as an RM parallax barrier that uses reactive mesogen typified by a liquid crystal material, or an active image separation section that uses a separate liquid crystal panel to the image forming section. Also, a parallax element that uses a lenticular lens can be used as the image separation section instead of a parallax barrier.

When the active image separation section such as described above is used, a display device can be configured that is capable of easily switching from a multi-view display device capable of simultaneously displaying two or more display images in different display directions to a display device that displays a single display image, given that the places for transmitting and shading the light of display images formed by the image forming section can be easily changed.

A display device can be also configured that is capable of switching to a veil-view display device configured to be able to prevent a display image being viewed from other directions by being able to display the display image in only one prescribed display direction, or a 3D (Dimension) display device capable of displaying display images three-dimensionally.

The use of the parallax barrier such as described above that includes the transmission section for transmitting the light of a display image and the shading section for shading the light is, however, preferable in that the image separation section can be made compact with a simple structure, enabling the display device to be easily reduced in size.

Further, integrating the image forming section (liquid crystal panel) and the image separation section (parallax barrier), as described above, is preferable in that miniaturization of the display device can be achieved. Moreover, this configuration is also preferable in that a display device that enables the assembly process to be simplified can be easily configured.

Besides the description given above, an antireflection film that prevents reflection of light may be formed on the surface of the display side and/or the surface of the non-display side of the shading sections. That is, forming an antireflection film on the surface of the display side of the shading sections is preferable in that reflection of external light incident from outside the display device by the shading sections can be prevented, enabling any reduction in display quality due to the reflection of external light to be prevented.

On the other hand, forming the antireflection film on the surface of the non-display side of the shading section is preferable in that reflection of light from the backlight device by the shading sections and further multiple reflection by the array substrate, the CF substrate or the like can be prevented, and crosstalk caused by this multireflected light being output externally to the display device can be prevented before it occurs.

While cold cathode tubes were used for the light source in the above description, the light source of the present invention is not limited to this, and a linear light source that uses a discharge tube such as a hot cathode tube or a xenon tube, or a point light source such as an LED can also be used. While an edge-light backlight device was used in the above description, a direct backlight device can also be used.

When such a direct backlight device is used, however, the directionality of the light for the display images preferably is improved in order to more easily change the luminance of the plurality of display images that are simultaneously displayable. Specifically, the directionality of the light preferably is enhanced by an optical member such as a light source, which outputs light with high directionality, or a reflector.

While two display images were simultaneously formed and displayed based on two corresponding display signals in the above description, a time-division drive for forming and displaying the left image and the right image alternately can also be used, for example. Specifically speaking, black display is performed when displaying one of the left and right images, without performing image display for the other display image. Further, a so-called scan backlight that turns the corresponding light sources on and off in response to the time-division drive of the image display and the black display can also be implemented.

When time-division driving such as described above is used, however, a liquid crystal layer with fast responsiveness such as OCB mode preferably is used, since problems such as a reduction in display quality due to flicker or the like could occur. Further, when combined with a scan backlight, an LED is preferably used for the light source instead of a discharge tube such as a cold cathode tube, since rapid turning on and off in response to the time-division driving of the display images is required.

While a configuration in which the crosstalk level determination section extracts the brighter of the left image and the right image, and determines a crosstalk level using the brighter display image was described above, when displaying three or more display images simultaneously, the crosstalk level determination section acquires the luminance information of each information display image to be simultaneously displayed from a corresponding image signal, and extracts the display image with the maximum luminance based on the acquired luminance information. Further, the crosstalk level determination section can determine the crosstalk level of the extracted display image on the other display images for each of the other display images, using the above equation (1), the luminance information of the extracted display image, and the luminance information of the other display images.

Industrial Applicability

The display device according to the present invention can be configured as a display device with superior display capabilities that is able to display each information display image at a suitable luminance even when simultaneously displaying a plurality of information in a plurality of display directions, and is therefore applicable to a display device that is required to respectively display a plurality of different information to a plurality of users.

**Claims**

1. A display device (2) configured to simultaneously display a plurality of display images from a unique display surface, each of the display images being displayed in a different display direction, comprising:

   a plurality of light sources (16a, 16b), wherein the number of light sources (16a, 16b) corresponds to the number of display images that are simultaneously displayable, and each light source (16a, 16b) is adapted to output light corresponding to one of the simultaneously displayed images; and
   a control section (4) adapted to control a drive of the plurality of light sources (16a, 16b), wherein the control section (4) includes a lighting control section (18) that controls the drive of the plurality of light sources (16a, 16b) independently from one another;
   **characterized in that**
   the control section (4) comprises a display control section (19) including a crosstalk level determination section (19b) arranged to calculate crosstalk levels of the display image having the highest luminance on each other ones of said plurality of display images, by applying the luminance information of the plurality of display images acquired by the display control section (19) to a prescribed mathematical expression, and
   the display control section (19) is adapted to output an instruction signal to the lighting control section (18) based on the crosstalk levels determined by the crosstalk level determination section (19b), wherein the lighting control section (18) controls light intensity of the light sources (16a. 16b) such that each of the plurality of calculated crosstalk levels becomes lower than a predetermined threshold.

2. The display device according to claim 1, further comprising:

   an image forming section that forms the display images using incident light as light from the light sources (16a, 16b) is incident thereon, and outputs light corresponding to the formed display images; and
   an image separation section that, by separating, in the plurality of display directions, the light of the display images output from the image forming section, makes each display image visible in a corresponding display direction, wherein
   the display control section (19) is configured to, together with controlling a drive of the image forming section based on input image signals, acquire luminance information of each display image to be simultaneously displayed from a corresponding image signal, and to output the instruction signal for changing the light intensity of each light source (16a, 16b) to the lighting control section (18) based on the crosstalk levels.

3. The display device according to claim 2, wherein the crosstalk level determination section (19b), when the luminance information of the display images to be simultaneously displayed is acquired from the corresponding image signals, extracts a display image with a maximum luminance based on the acquired luminance information, and determines the crosstalk levels of the extracted display image on each other ones of the plurality of display images, using the luminance information of the extracted display image and the luminance information of the other display images.

4. The display device according to claim 3, wherein the crosstalk level determination section (19b) derives each crosstalk level XT using the following equation (1)

$$XT = Z \times K/Y$$

where Z is a luminance value of the extracted display image, K is a coefficient indicating a luminance increase rate in the other display image due to crosstalk from the extracted display image, and Y is a luminance value of the other display image.

5. The display device according to any one of claims 2 to 4, wherein a parallax barrier (6) that includes a transmission section (13) for transmitting the light of the display images output from the image forming section and a shading section (11) for shading the light is used for the image separation section.

6. The display device according to claim 5, wherein the parallax barrier (6) is adhered to a colour filter substrate (8) of the image forming section by an adhesion layer (12).

**Patentansprüche**

1. Anzeigeeinrichtung (2), die ausgebildet ist, eine Mehrzahl von Anzeigebildern einer einzelnen Anzeigefläche gleichzeitig anzuzeigen, wobei jedes der Anzeigebilder in einer unterschiedlichen Anzeigerichtung angezeigt wird, mit:

einer Mehrzahl von Lichtquellen (16a, 16b), wobei die Anzahl der Lichtquellen (16a, 16b) zur Anzahl der Anzeigebilder, die gleichzeitig anzeigbar sind, korrespondiert und wobei jede Lichtquelle (16a, 16b) dazu ausgebildet ist, Licht korrespondierend zu einem der gleichzeitig angezeigten Bilder auszugeben, und einem Steuerbereich (4), der ausgebildet ist, den Betrieb der Mehrzahl von Lichtquellen (16a, 16b) zu steuern, wobei der Steuerbereich (4) einen Beleuchtungssteuerbereich (18) aufweist, welcher den Betrieb der Mehrzahl von Lichtquellen (16a, 16b) unabhängig voneinander steuert, **dadurch gekennzeichnet,** **dass** der Steuerbereich (4) einen Anzeigesteuerbereich (19) mit einen Einstreupegelbestimmungsbereich (19b) aufweist, der ausgebildet ist, Einstreupegel des Anzeigebilds mit der höchsten Luminanz auf jedem anderen der Mehrzahl von Anzeigebildern durch Anwenden der Luminanzinformation der Mehrzahl von Anzeigebildern, die erfasst wird oder wurde durch den Anzeigesteuerbereich (19), auf einen vorbestimmten mathematischen Ausdruck zu berechnen, und **dass** der Anzeigesteuerbereich (19) ausgebildet ist, ein Instruktionssignal an den Beleuchtungssteuerbereich (18) auf der Grundlage der Einstreupegel auszugeben, die bestimmt wurden durch den Einstreupegelbestimmungsbereich (19b), wobei der Beleuchtungssteuerbereich (18) die Lichtintensität der Lichtquellen (16a, 16b) derart steuert, dass jeder der Mehrzahl der berechneten Einstreupegel geringer wird als ein vorbestimmter Schwellwert.

2. Anzeigeeinrichtung nach Anspruch 1, welche des Weiteren aufweist:

einen Bilderzeugungsbereich, der die Anzeigebilder unter Verwendung einfallenden Lichts, wenn Licht der Lichtquellen (16a, 16b) darauf einfällt, ausbildet und Licht korrespondierend zu den erzeugten Anzeigebildern ausgibt, und einen Bildseparationsbereich, der durch Separieren des Lichts der Anzeigebilder, die vom Bilderzeugungsbereich ausgegeben werden, in der Mehrzahl von Anzeigeeinrichtungen jedes Anzeigebild in einer entsprechenden Anzeigerichtung sichtbar macht, wobei der Anzeigesteuerbereich (19) ausgebildet ist, zusammen mit dem Steuern eines Betriebs des Bilderzeugungsbereichs auf der Grundlage von Eingangsbildsignalen Luminanzinformation jedes gleichzeitig anzuzeigenden Anzeigebilds aus einem korrespondierenden Bildsignal zu erfassen und das Instruktionssignal zum Ändern der Lichtintensität jeder Lichtquelle (16a, 16b) an den Beleuchtungssteuerbereich (18) auf der Grundlage der Einstreupegel auszugeben.

3. Anzeigeeinrichtung nach Anspruch 2,
   wobei der Einstreupegelbestimmungsbereich (19b), wenn die Luminanzinformation der gleichzeitig anzuzeigenden Anzeigebilder aus den korrespondierenden Bildsignalen erfasst wird, ein Anzeigebild mit einer maximalen Luminanz auf der Grundlage der erfassten Luminanzinformation extrahiert und die Einstreupegel des extrahierten Anzeigebilds auf jedem anderen der Mehrzahl der Anzeigebilder unter Verwendung der Luminanzinformation des extrahierten Anzeigebilds und der Luminanzinformation der anderen Anzeigebilder bestimmt.

4. Anzeigeeinrichtung nach Anspruch 3,
   wobei der Einstreupegelbestimmungsbereich (19b) jeden Einstreupegel XT unter Verwendung der nachfolgenden Gleichung (1)

$$XT = Z \times K / Y$$

ermittelt,
wobei Z ein Luminanzwert des extrahierten Anzeigebilds, K ein Koeffizient, welcher ein Luminanzanstiegsmaß im anderen Anzeigebild auf Grund des Einstreuens vom extrahierten Anzeigebild und X einen Luminanzwert des anderen Anzeigebilds bezeichnet.

5. Anzeigeeinrichtung nach einem der Ansprüche 2 bis 4,
   wobei eine Parallaxenbarriere (6), welche einen Übertragungsbereich (13) zum Übertragen des Lichts der Anzeigebilder, die vom Bilderzeugungsbereich ausgegeben werden, und einen Abschattungsbereich (11) zum Abschatten des Lichts aufweist, für den Bildseparationsbereich verwendet wird.

6. Anzeigeeinrichtung nach Anspruch 5,
   wobei die Parallaxenbarriere (6) auf einem Farbfiltersubstrat (8) des Bilderzeugungsbereichs mittels einer Klebeschicht (12) aufgeklebt ist.


**Revendications**

1. Dispositif d'affichage (2) conçu pour afficher simultanément une pluralité d'images d'écran provenant d'une surface d'affichage unique, chacune des images d'écran étant affichée dans une direction d'affichage différente, comprenant :

   une pluralité de sources lumineuses (16a, 16b), dans lequel le nombre de sources lumineuses (16a, 16b) correspond au nombre d'images d'écran pouvant être affichées simultanément, et chaque source lumineuse (16a, 16b) est conçue pour émettre de la lumière correspondant à l'une des images affichées simultanément ; et
   une section de commande (4) conçue pour commander un pilotage de la pluralité des sources lumineuses (16a, 16b), dans lequel la section de commande (4) comprend une section de commande d'éclairage (18) qui commande le pilotage de la pluralité de sources lumineuses (16a, 16b) indépendamment les unes des autres ;
   **caractérisé en ce que**
   la section de commande (4) comprend une section de commande d'affichage (19) comprenant une section de détermination de niveau de diaphonie (19b) conçue pour calculer des niveaux de diaphonie de l'image d'écran présentant la luminance la plus élevée sur chacune des autres images de ladite pluralité d'images d'écran, par application des informations de luminance de la pluralité d'images d'écran acquises par la section de commande d'affichage (19) à une expression mathématique prescrite, et
   la section de commande d'affichage (19) est conçue pour délivrer en sortie un signal d'instruction à la section de commande d'éclairage (18) sur la base de niveaux de diaphonie déterminés par la section de détermination de niveau de diaphonie (19b), dans lequel la section de commande d'éclairage (18) commande l'intensité de lumière des sources lumineuses (16a, 16b), de sorte que chacun de la pluralité de niveaux de diaphonie calculés devient inférieur à un seuil prédéfini.

2. Dispositif d'affichage selon la revendication 1, comprenant en outre :

une section de formation d'image qui forme les images d'écran à l'aide de lumière incidente comme lumière en provenance des sources lumineuses (16a, 16b) incidente sur celles-ci, et émet de la lumière correspondant aux images d'écran formées ; et

une section de séparation d'image, laquelle, en séparant, dans la pluralité de directions d'affichage, la lumière des images d'écran émise à partir de la section de formation d'image, rend chaque image d'écran visible dans une direction d'affichage correspondante, dans lequel

la section de commande d'affichage (19) est conçue, conjointement avec la commande d'un pilotage de la section de formation d'image sur la base de signaux d'image d'entrée, pour acquérir des informations de luminance de chaque image d'écran à afficher simultanément à partir d'un signal d'image correspondant, et pour délivrer en sortie le signal d'instruction pour modifier l'intensité de lumière de chaque source lumineuse (16a, 16b) à la section de commande d'éclairage (18) sur la base des niveaux de diaphonie.

3. Dispositif d'affichage selon la revendication 2, dans lequel la section de détermination de niveau de diaphonie (19b), lorsque les informations de luminance des images d'écran à afficher simultanément sont acquises à partir des signaux d'image correspondants, extrait une image d'écran d'une luminance maximale sur la base des informations de luminance acquises, et détermine les niveaux de diaphonie de l'image d'écran extraite sur chacune des autres images de la pluralité d'images d'écran, par utilisation des informations de luminance de l'image d'écran extraite et des informations de luminance des autres images d'écran.

4. Dispositif d'affichage selon la revendication 3, dans lequel la section de détermination de niveau de diaphonie (19b) dérive chaque niveau de diaphonie XT à l'aide de l'équation (1) suivante

$$XT = Z \times K/Y$$

où Z est une valeur de luminance de l'image d'écran extraite, K est un coefficient indiquant un taux d'augmentation de luminance dans l'autre image d'écran dû à une diaphonie de l'image d'écran extraite, et Y est une valeur de luminance de l'autre image d'écran.

5. Dispositif d'affichage selon l'une quelconque des revendications 2 à 4, dans lequel une barrière de parallaxe (6), qui comprend une section de transmission (13) pour transmettre la lumière des images d'écran émise à partir de la section de formation d'image et une section d'ombrage (11) pour l'ombrage de la lumière, est utilisée pour la section de séparation d'image.

6. Dispositif d'affichage selon la revendication 5, dans lequel la barrière de parallaxe (6) est amenée à adhérer à un substrat de filtre coloré (8) de la section de formation d'image par une couche d'adhésion (12).

**FIG. 1**

FIG. 2

First Drive Signal Generation Section — 18a

Second Drive Signal Generation Section — 18b

Lighting Control Section

18

T1 — 16a — RC1

FB1

T2 — 16b — RC2

FB2

FIG. 3

FIG. 4

EP 2 065 880 B1

FIG. 5A

P2

P2a   P2b

P1

FIG. 5B

P2

P2a   P2b

P1'

P1a'   P1b'

FIG. 5C

P2

P2a   P2b

P1'

P1a'   P1b'

FIG. 6

FIG. 7

EP 2 065 880 B1

**EP 2 065 880 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000137443 A
- JP 2004212648 A
- US 20050046951 A1